# EUROPÄISCHE PATENTANMELDUNG

(11) **EP 4 491 685 A1**
(43) Veröffentlichungstag der Anmeldung: **15.01.2025**
(21) Anmeldenummer: 24187878.4
(22) Anmeldetag: 10.07.2024
(51) Int. Cl.: C09D 125/06, C08K 3/04, C08K 3/08, C08L 25/06, E04B 1/74

(54) **BESCHICHTUNGSMATERIAL ZUR GASDICHTEN ABDICHTUNG AUF BASIS EINES IN EINEM NATIVEN LÖSEMITTEL AUFGELÖSTEN SCHAUMSTOFFS - CUVAPOR**

(30) Priorität: 11.07.2023 DE 202023103880 U
(71) Anmelder: Sorge, Michael, 37077 Göttingen (DE)
(72) Erfinder: Sorge, Michael, 37077 Göttingen (DE)
(74) Vertreter: RGTH

(57) **Zusammenfassung**

Um ein Beschichtungsmaterial zur Beschichtung und gasdichten Abdichtung eines Trägerkörpers derart zu verbessern, dass eine hochwertige gasdichte Abdichtung mit möglichst geringem Materialaufwand erreicht werden kann, wird vorgeschlagen, das Beschichtungsmaterial durch Auflösen eines Schaumstoffs auf Basis von Polystyrol in einem nativen Lösungsmittel herzustellen.

## Beschreibung

### Technisches Gebiet

Die Erfindung betrifft ein Beschichtungsmaterial zur Beschichtung und gasdichten Abdichtung eines Trägerkörpers. Das Beschichtungsmaterial wird im Sinne der vorliegenden Erfindung CUVApor genannt.

Des Weiteren betrifft die Erfindung ein Dämmelement zur Wärmeisolierung und/oder Schallisolierung, aufweisend einen Trägerkörper, wobei der Trägerkörper innen und/oder außen mit mindestens einer Beschichtung beschichtet ist.

### Stand der Technik

In der DE 20 2014 102 825 U1 wird ein Baustein mit einem vollumfänglich geschlossenen Hohlraum sowie auch ein Betonsystem mit zumindest einem Bindemittel, einem Dispersionsklebstoff und Füllmitteln beschrieben.

Die DE 20 2016 102 027 U1 offenbart einen streichfähigen Baustoff mit einem Bindemittel und einem Dispersionsklebstoff.

In der DE 20 2016 106 261 U1 wird ein Dämmelement mit einem beschichteten Grundkörper zur Isolierung beschrieben. Die DE 20 2018 104 079 beschreibt ebenfalls ein Dämmelement mit einem beschichteten Grundkörper, wobei hier eine radikal härtende Grundierung vorgesehen ist.

### Darstellung der Erfindung: Aufgabe, Lösung, Vorteile

Aufgabe der vorliegenden Erfindung ist es, ein Beschichtungsmaterial zur Beschichtung und gasdichten Abdichtung eines Trägerkörpers derart zu verbessern, dass eine hochwertige gasdichte Abdichtung mit möglichst geringem Materialaufwand erreicht werden kann.

Erfindungsgemäß wird hierfür ein Beschichtungsmaterial zur Beschichtung und gasdichten Abdichtung eines Trägerkörpers vorgeschlagen, wobei das Beschichtungsmaterial durch Auflösen eines Schaumstoffs auf Basis von Polystyrol in einem nativen Lösungsmittel hergestellt wurde. Wahlweise kann auch massives Polystyrol, z.B. in Platten/Stücken/Schnitzeln o.ä., gelöst werden.

Der Trägerkörper kann beispielsweise plattenförmig, bausteinförmig oder in einer beliebig anderen Form anderweitig ausgebildet sein und weist im Inneren überwiegend eine Matrix auf, die möglichst viel Luft einschließt und / oder enthält, wie z.B. MDF-Platten, und so, zumindest bereichsweise, mit einem Unterdruck versehen werden kann. Das Beschichtungsmaterial zur Beschichtung der Außen- oder Innenfläche des Trägerkörpers muss deshalb in der Lage sein, die Dampfdiffusionsdichte soweit zu verbessern, dass mit möglichst geringen Beschichtungsstärken ein stabiles Vakuum erreicht wird beziehungsweise der Unterdruck im Inneren des Trägerkörpers über sehr lange Zeit stabil gehalten wird.

Hierfür wird der Schaumstoff auf Basis von Polystyrol derart mit einem nativen Lösungsmittel vermischt, dass ein flüssiges oder zähflüssiges Beschichtungsmaterial entsteht. Der Polystyrol aufweisende Stoff kann dazu in jeder geeigneten Form verwendet werden. Z.B. in Form von Platten, Stücken oder Schnitzel. Das Ergebnis ist in jedem Fall ein streichfähiger, sprühfähiger und/oder gießfähiger Flüssigkunststoff. Dieser Flüssigkunststoff trocknet innerhalb von wenigen Minuten nach dem Auftragen auf die Oberfläche des Trägerkörpers an und härtet innerhalb von wenigen Stunden aus.

Polystyrol hat eine besonders geringe Wärmeleitfähigkeit und weist gleichzeitig eine hohe Dampfdiffusionsdichte auf. Beispielsweise weist Polystyrol eine um einen Faktor 10 höheren Dampfdiffusionswiderstand als Epoxid auf. Mittels des erfindungsgemäß hergestellten Beschichtungsmaterials kann eine hochfeste, aber restflexible Beschichtung mit sehr hoher Bruch- und Schlagfestigkeit erreicht werden. Aufgrund der besonderen Eigenschaften, insbesondere der hohen Dampfdiffusionsdichte kann die Beschichtung möglichst dünn gehalten werden, sodass das Gesamtgewicht des Trägerkörpers durch das Beschichtungsmaterial beziehungsweise die Beschichtung nur geringfügig zunimmt und gleichzeitig die Kosten für das Beschichtungsmaterial gering gehalten werden.

Um den Arbeitsaufwand beim Aufbringen der Beschichtung in ausreichender Schichtdicke möglichst gering zu halten, ist es möglich, Polystyrolplatten als umschließende Hülle um den Trägerkörper zu kleben. Die Dicke der Polystyrolplatten wird dabei möglichst gering gehalten. Beispielsweise können sie eine Dicke von kleiner als 3 mm, vorzugsweise kleiner als 2 mm, insbesondere von 1 mm aufweisen.

Die den Trägerkörper umschließenden Polystyrolplatten können gemäß der Erfindung als Teil des Trägerkörpers oder als Zwischenschicht angesehen werden. Die erfindungsgemäße Beschichtung wird bei dieser Variante auf die Polystyrolplatten aufgebracht.

Dabei wird die Fläche und ebenso die Kanten bzw. der Rahmen mit diesen Polystyrolplatten umschlossen und mit der erfindungsgemäßen Beschichtung (CUVApor) verklebt. Die erfindungsgemäße Beschichtung kann somit auch als Kleber für die Polystyrolplatten dienen.

Hierbei bietet die Löseeigenschaft von Polystyrol in CUVApor die ideale Möglichkeit, die Plattenkanten zu verbinden. Dadurch, dass CUVApor die Polystyrol-Oberfläche "anlöst" und sich daraufhin beide Plattenkanten verbinden, entsteht eine vollständige quasi "Schweißnaht", die die Polystyrolplatten in einem Stück unlösbar verbindet und die ihre Funktion der durchgehenden Dampfdiffusionssperre (Vakuumdichte) möglich machen.

So entsteht auch hier, wie bei der alleinigen Beschichtung mit CUVApor, eine durchgehende und vollumfängliche Hülle ohne Schweißnaht, die versagen könnte.

Die CUVApor Verklebung ("Verschweißung") ähnelt damit in ihre Bauart eher einer Stahl-Schweißnaht. Die CUVApor Lackierung kann dann auf die Polystyrolplatten, wie beschrieben, weiter aufgebracht werden.

Somit findet das erfindungsgemäße Beschichtungsmaterial zum Beschichten von Trägerkörpern in den unterschiedlichsten Bereichen Anwendung. Beispielsweise kann ein mit dem erfindungsgemäßen Beschichtungsmaterial beschichteter Trägerkörper zur Isolierung von Räumen oder feststehenden Gebäuden dienen. Aufgrund der geringen Kosten und des geringen Gewichtes könnte dieses System aber auch Anwendung in transportablen beziehungsweise mobilen Bereichen, wie beispielsweise Wohnwägen, Wohncontainern, Wohnmobilen, Kühlsystemen, Kühlcontainern, Kühlboxen, und so weiter eingesetzt werden.

Bevorzugterweise weist der Schaumstoff expandiertes EPS oder extrudiertes XPS auf oder besteht daraus.

Des Weiteren könnte der Schaumstoff mit Graphit, insbesondere Graphitpulver, angereichert sein. Ein mit Graphitpulver angereicherter Schaumstoff wird beispielsweise durch Neopor^{®} bereitgestellt. Neopor^{®} könnte, wie auch EPS oder XPS, im nativen Lösemittel aufgelöst werden, um das Beschichtungsmaterial herzustellen. Durch den Graphitanteil wird die Absorptionsfähigkeit einer Infrarotstrahlung erhöht. Infrarotstrahlung ist üblicherweise zu ca. 20% an der Wärmeübertragung durch ein Medium beteiligt.

Des Weiteren ist bevorzugterweise vorgesehen, dass das native Lösemittel Terpene, insbesondere Orangenterpene aufweist oder daraus besteht. Native Orangenterpene wird aus dem nativen Reststoff "Orangenschale" hergestellt. Das mechanisch gepresste Orangenöl aus der Schale der Zitrusfrüchte wird danach zu Terpene destilliert. Somit entsteht das native Lösemittel auf Basis von Orangenterpenen. Üblicherweise finden derartige Orangenterpene in Reinigungsmitteln ihren Einsatz.

Bevorzugterweise liegt das Gewichtsverhältnis zwischen dem Schaumstoff und dem nativen Lösemittel zwischen 0,1 und 1, besonders bevorzugterweise zwischen 0,25 und 0,7, sowie ganz besonders bevorzugterweise zwischen 0,3 und 0,5. Dabei ergibt ein Verhältnis 1:9 von Schaumstoff und nativem Lösemittel einen relativ dünnflüssigen Flüssigkunststoff. Ein Verhältnis von 1:1 ergibt dagegen einen eher cremigen, zähen beziehungsweise honigartigen Flüssigkunststoff. Tests haben ergeben, dass bei Verwendung von Neopor^{®} als Schaumstoff und Orangenterpenen als natives Lösemittel ein Verhältnis von 1:3 beziehungsweise 25:75 zwischen Schaumstoff und dem nativen Lösemittel besonders geeignet ist. Bei Verwendung von EPS als Schaumstoff ist dagegen ein Gewichtsverhältnis zwischen dem Schaumstoff und dem nativen Lösemittel von ca. 0,5 beziehungsweise 33:66 besonders geeignet. Prinzipiell sind alle Gewichtsverhältnisse zwischen 0,1 : 1,0 bis 1,0 : 1,0 (Polystyrol/Orangenterpene) möglich.

Ferner ist bevorzugterweise vorgesehen, dass das Beschichtungsmaterial ein Metall, insbesondere Aluminium aufweist. Dabei kann das Metall vor, während oder nach dem Auflösen des Schaumstoffs im Lösemittel hinzugefügt werden. Beispielsweise könnte das Metall vor dem Auflösen des Schaumstoffs im Lösemittel dem Lösemittel hinzugefügt werden. Auch könnte das Metall während des Auflösens des Schaumstoffs im Lösemittel dem Gemisch hinzugefügt werden. Alternativerweise könnte das Metall nach dem Auflösen des Schaumstoffs im Lösemittel und somit dem daraus entstandenen Flüssigkunststoff hinzugefügt werden.

Zur Herstellung des Beschichtungsmaterials ist bevorzugterweise vorgesehen, dass dem durch das Auflösen des Schaumstoffs im nativen Lösemittel erzeugten Flüssigkunststoff Metall in Pulverform beziehungsweise Metallpulver hinzugefügt wird. Besonders bevorzugterweise eignet sich hierfür Aluminiumpulver. Im Ergebnis weist der dadurch entstehende Flüssigkunststoff Eigenschaften einer flüssigen Metallfolie auf. Im Gegensatz zur Verwendung von Metallfolien, zum Beispiel Aluminiumfolien für die Beschichtung eines Trägerkörpers, hat der Flüssigkunststoff beziehungsweise das Beschichtungsmaterial den Vorteil, dass die flüssige Metallfolie ohne jegliche Schweißnaht auf die Oberfläche des Trägerkörpers aufgebracht werden kann, völlig unabhängig von der Formgebung des Trägerkörpers.

Auch ist bevorzugterweise vorgesehen, dass das Gewichtsverhältnis zwischen dem Flüssigkunststoff und dem Metallpulver zwischen 1:1 und 4:1, sowie besonders bevorzugterweise zwischen 2:1 und 3:1 liegt.

Erfindungsgemäß ist ferner ein Dämmelement zur Wärmeisolierung und/oder Schallisolierung, aufweisend einen Trägerkörper, wobei der Trägerkörper innen und/oder außen mit mindestens einer Beschichtung beschichtet ist, vorgesehen. Die Beschichtung des erfindungsgemäßen Dämmelements weist ein vorbeschriebenes Beschichtungsmaterial auf.

Bevorzugterweise weist der Trägerkörper einen umschlossenen Hohlraum auf.

Das Dämmelement kann jede geeignete Form beziehungsweise Geometrie aufweisen. Bevorzugterweise ist der Trägerkörper für das Dämmelement als Baustein oder Platte ausgebildet.

Zur Isolierung weist der Trägerkörper mindestens einen umschlossenen Hohlraum auf, kann aber auch mehrere separate Hohlräume aufweisen. Durch den mindestens einen Hohlraum wird ein Volumen im Inneren des Grundkörpers beziehungsweise Trägerkörpers definiert beziehungsweise umschlossen.

Bevorzugterweise weist der Trägerkörper Holz, Holzfasern, MDF, HDF, Holzwolle, Mineralwolle, Pappe, Pappwabe, Papier, Gasbeton, EPS, XPS, PU-Hartschaum, Perlit und/oder Porenbeton auf oder besteht daraus. Beispielsweise könnte der Trägerkörper auch als Neopor^{®}, also als mit Graphitpulver versehenes Polysterol, ausgebildet sein. Schaumstoffe auf Basis von Polystyrol weisen einen hohen Luftanteil bzw. viele kleine mit Luft gefüllte Hohlräume auf. Die Luft kann mit einfachen Mitteln reduziert werden und so ein Unterdruck erzeugt werden. In dem mindestens einen Hohlraum des Trägerkörpers ist vorzugsweise in Bezug auf die Umgebung bei Normalbedingungen ein Unterdruck vorgesehen.

Besonders bevorzugterweise weist der Grundkörper beziehungsweise Trägerkörper im Hohlraum einen Druck kleiner als 800 mBar, ganz besonders bevorzugterweise kleiner als 500 mBar auf. Beispielsweise könnte ein Unterdruck kleiner als 300 oder sogar kleiner als 100 mBar oder sogar kleiner als 10mbar vorgesehen sein. Dadurch kann ein Dämmelement mit besonders hoher Dämmwirkung beziehungsweise Isolierwirkung bereitgestellt werden. Dies erfolgt, indem dem Hohlraum des Trägerkörpers dauerhaft geschützt durch die Hülle des Beschichtungsmaterials die Luftmoleküle entzogen werden. Dadurch kann keine beziehungsweise nur eine geringe Wärmeübertragung durch das Medium erfolgen, weil die geringe Anzahl der Moleküle nur eine minimale kinetische Energie zur Übertragung der Wärme erzeugen kann. Diese kinetische Energie ist sonst zu ca. 70% an der Wärmeübertragung beteiligt.

Bevorzugterweise ist die Beschichtung mit einer Stärke zwischen 100 und 2000 g/m², besonders bevorzugterweise zwischen 250 und 1.500 g/m², sowie ganz besonders bevorzugterweise zwischen 500 und 1.000 g/m², bezogen auf die Außenfläche des Trägerkörpers, auf diesen aufgetragen.

Des Weiteren ist die Beschichtung bevorzugterweise mehrschichtig ausgebildet und weist mindestens eine Grundierung sowie eine Hauptschicht auf. Dabei kann die Grundierung analog zum vorbeschriebenen Beschichtungsmaterial hergestellt sein. Die Grundierung könnte mit denselben Verhältnissen aus Schaumstoff und nativem Lösemittel oder mit abweichenden Verhältnissen im Vergleich zum Beschichtungsmaterial für die Hauptschicht hergestellt sein. Alternativerweise könnte die Grundierung auch aus einem anderen Material bestehen. Beispielsweise bietet sich für die Grundierung auch Cyanacrylat bzw. Sekundenkleber an. Diese Grundierung schließt und vernetzt die Matrix des Kernmaterials so sehr, dass in der Folge weniger CUVApor als Beschichtungsmaterial benötigt wird. Ab 300 g/m2 beziehungsweise ab 400 g/m2 und in jedem Fall ab 500 g/m2 bildet Cyanacrylat/Sekundenkleber bereits "alleine" eine Gasdichte Deckschicht als Hülle um das Kernmaterial.

Ferner ist bevorzugterweise vorgesehen, dass die Beschichtung eine Deckschicht aufweist. Das Beschichtungsmaterial für die Deckschicht kann ebenfalls analog zum vorbeschriebenen Beschichtungsmaterial für die Hauptschicht hergestellt sein. Alternativerweise könnte das Beschichtungsmaterial für die Deckschicht ein anderes Material beziehungsweise eine andere Materialzusammensetzung aufweisen. Zum Beispiel könnte die Deckschicht als Baustoff mit einem Bindemittel und einem Dispersionsklebstoff, beispielsweise Holzleim, hergestellt sein.

Ferner ist erfindungsgemäß ein Verfahren zur Herstellung eines Beschichtungsmaterials zur Beschichtung und gasdichten Abdichtung eines Trägerkörpers vorgesehen, wobei ein Schaumstoff auf Basis von Polysterol in einem nativen Lösemittel aufgelöst wird.

Bevorzugterweise wird der Schaumstoff und/oder der nach dem Auflösen des Schaumstoffs im Lösemittel erzeugte Flüssigkunststoff mit Graphit, insbesondere Graphitpulver, angereichert.

Ferner ist bevorzugterweise vorgesehen, dass der Schaumstoff mit dem nativen Lösemittel in einem Gewichtsverhältnis zwischen 0,1 und 1, besonders bevorzugterweise zwischen 0,25 und 0,7, sowie ganz besonders bevorzugterweise zwischen 0,3 und 0,5, sowie noch bevorzugterweise von 0,4 vermischt wird.

Durch das Auflösen des Schaumstoffs im nativen Lösemittel wird bevorzugterweise ein Flüssigkunststoff als Zwischenprodukt erzeugt, welchem anschließend ein Metallpulver hinzugefügt wird.

Auch ist bevorzugterweise vorgesehen, dass der Flüssigkunststoff und das Metallpulver in einem Gewichtsverhältnis zwischen 1:1 und 4:1, besonders bevorzugterweise zwischen 2:1 und 3:1 vermischt werden.

### Kurze Beschreibung der Zeichnungen

Die Erfindung wird nun in Bezug auf die begleitenden Zeichnungen beispielhaft erläutert.

Es zeigen schematisch:
- Figur 1:: die einzelnen Komponenten zur Herstellung eines Beschichtungsmaterials,
- Figur 2:: eine Schnittdarstellung durch ein Dämmelement zur Wärmeisolierung und/oder Schallisolierung, und
- Figur 3:: eine weitere Schnittdarstellung durch ein Dämmelement zur Wärmeisolierung und/oder Schallisolierung, wobei hier der Trägerkörper mit einer mehrschichtigen Beschichtung versehen ist.

### Bevorzugte Ausführungsformen der Erfindung

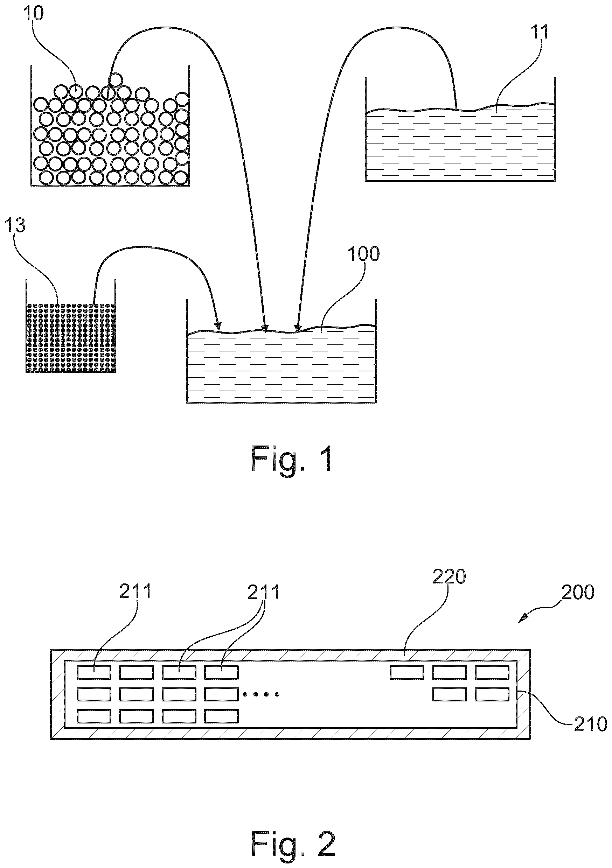

In Figur 1 sind schematisch die Komponenten zur Herstellung eines Beschichtungsmaterials 100 gezeigt. Zur Herstellung des Beschichtungsmaterials 100 wird ein Schaumstoff 10 auf Basis von Polystyrol mit einem nativen Lösemittel 11 vermischt beziehungsweise darin aufgelöst.

Optional und zur weiteren Verbesserung der Eigenschaften des daraus entstehenden Flüssigkunststoffs kann diesem in einem weiteren Schritt oder gleichzeitig während des Auflösens des Schaumstoffs 10 im nativen Lösemittel 11 ein Metallpulver 13 hinzugefügt werden. Besonders geeignet ist hier Aluminiumpulver.

Figur 2 zeigt schematisch eine Schnittdarstellung durch ein Dämmelement 200. Das Dämmelement 200 weist einen Trägerkörper 210 mit mehreren umschlossenen Hohlräumen 211 auf.

Auf der Außenoberfläche des Trägerkörpers 210 ist eine Beschichtung 220 angeordnet. Die Beschichtung 220 weist das vorbeschriebene Beschichtungsmaterial 100 auf.

Durch die Beschichtung 220 des Trägerkörpers 210 wird eine besonders hohe Dampfdiffusionsdichtigkeit erreicht und ein in den Hohlräumen 211 des Trägerkörpers 210 erzeugter Unterdruck kann über sehr lange Zeit erhalten werden. Somit weist das Dämmelement 200 eine langzeitstabile Isolierwirkung auf.

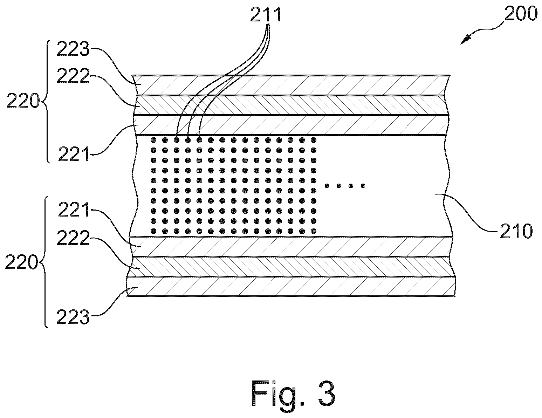

Figur 3 zeigt eine Schnittdarstellung durch einen Ausschnitt eines Dämmelementes 200, wobei die Außenoberfläche des Trägerkörpers 210 mit einer mehrschichtigen Beschichtung 220 versehen ist. Die Beschichtung 220 besteht hier aus einer Grundierung 221, einer Hauptschicht 222 und einer Deckschicht 223. Zumindest die Hauptschicht 222 weist das vorbeschriebene Beschichtungsmaterial 100 auf.

### Bezugszeichenliste

- 100: Beschichtungsmaterial

- 10: Schaumstoff
- 11: Lösemittel
- 12: Flüssigkunststoff
- 13: Metallpulver

- 200: Dämmelement
- 210: Trägerkörper
- 211: Hohlraum

- 220: Beschichtung
- 221: Grundierung
- 222: Hauptschicht
- 223: Deckschicht

## Patentansprüche

1. Beschichtungsmaterial (100) zur Beschichtung und gasdichten Abdichtung eines Trägerkörpers (210), **dadurch gekennzeichnet, dass** das Beschichtungsmaterial (100) durch Auflösen eines Schaumstoffs (10) auf Basis von Polystyrol in einem nativen Lösemittel (11) hergestellt wurde.

2. Beschichtungsmaterial (100) gemäß Anspruch 1, **dadurch gekennzeichnet, dass** der Schaumstoff (10) expandiertes EPS oder extrudiertes XPS aufweist oder daraus besteht; und/oder, dass der Schaumstoff (10) mit Graphit, insbesondere Graphitpulver, angereichert ist.

3. Beschichtungsmaterial (100) gemäß Anspruch 1 oder 2, **dadurch gekennzeichnet, dass** das native Lösemittel (11) Terpene, insbesondere Orangenterpene aufweist oder daraus besteht; und/oder, dass das Gewichtsverhältnis zwischen dem Schaumstoff (10) und dem nativen Lösemittel (11) zwischen 0,1 und 1, vorzugsweise zwischen 0,25 und 0,7, besonders bevorzugterweise zwischen 0,3 und 0,5 liegt, ganz besonders bevorzugterweise 0,4 beträgt.

4. Beschichtungsmaterial (100) gemäß einem der vorhergehenden Ansprüche, **dadurch gekennzeichnet, dass** das Beschichtungsmaterial (100) ein Metall, insbesondere Aluminium aufweist, wobei zur Herstellung des Beschichtungsmaterials (100) einem durch Auflösen des Schaumstoffs (10) im nativen Lösemittel (11) erzeugten Flüssigkunststoff (12) vorzugsweise Metallpulver (13), insbesondere Aluminiumpulver, hinzugefügt wurde.

5. Beschichtungsmaterial (100) gemäß Anspruch 4, **dadurch gekennzeichnet, dass** das Gewichtsverhältnis zwischen dem Flüssigkunststoff (12) und dem Metallpulver (13) zwischen 1:1 und 4:1, vorzugsweise zwischen 2:1 und 3:1 liegt.

6. Dämmelement (200) zur Wärmeisolierung und/oder Schallisolierung, aufweisend einen Trägerkörper (210), wobei der Trägerkörper (210) innen und/oder außen mit mindestens einer Beschichtung (220) beschichtet ist, **dadurch gekennzeichnet, dass** die Beschichtung (220) ein Beschichtungsmaterial (100) gemäß einem der vorhergehenden Ansprüche aufweist oder daraus besteht.

7. Dämmelement (200) gemäß Anspruch 6, **dadurch gekennzeichnet, dass** der Trägerkörper (210) mindestens einen umschlossenen Hohlraum (211) aufweist; und/oder dass der Trägerkörper (210) als Baustein oder Platte ausgebildet ist.

8. Dämmelement (200) gemäß einem der Ansprüche 6 oder 7, **dadurch gekennzeichnet, dass** der Trägerkörper (210) Holz, Holzfasern, MDF, HDF, Holzwolle, Mineralwolle, Pappe, Pappwabe, Papier, Gasbeton, EPS, XPS, PU-Hartschaum, Perlit und/oder Porenbeton aufweist oder daraus besteht.

9. Dämmelement (200) gemäß einem der Ansprüche 6 bis 8, **dadurch gekennzeichnet, dass** der Trägerkörper (210) im Hohlraum (211) einen Unterdruck in Bezug auf eine Umgebung bei Normalbedingung aufweist; wobei der Trägerkörper (210) im Hohlraum (211) bevorzugterweise einen Druck kleiner als 800 mbar, besonders bevorzugterweise kleiner als 500 mbar, ganz besonders bevorzugterweise kleiner als 300 mbar, äußerst bevorzugterweise kleiner als 100 mbar, insbesondere bevorzugterweise kleiner 10 mbar aufweist.

10. Dämmelement (200) gemäß einem der Ansprüche 6 bis 9, **dadurch gekennzeichnet, dass** die Beschichtung (220) mit einer Stärke zwischen 100 und 2000 g pro m², vorzugsweise zwischen 250 und 1500 g pro m², besonders bevorzugterweise zwischen 500 und 1000 g pro m², bezogen auf die Außenfläche des Trägerkörpers (210) aufgetragen ist.

11. Dämmelement (200) gemäß einem der Ansprüche 6 bis 10, **dadurch gekennzeichnet, dass** die Beschichtung (220) mehrschichtig ausgebildet ist und mindestens eine Grundierung (221) und eine Hauptschicht (222) aufweist; wobei die Beschichtung (220) vorzugsweise eine Deckschicht (223) aufweist.

12. Verfahren zur Herstellung eines Beschichtungsmaterials (100) zur Beschichtung und gasdichten Abdichtung eines Trägerkörpers (200), **dadurch gekennzeichnet, dass** ein Schaumstoff (10) auf Basis von Polystyrol in einem nativen Lösemittel (11) aufgelöst wird.

13. Verfahren gemäß Anspruch 12, **dadurch gekennzeichnet, dass** der Schaumstoff (10) mit Graphit, insbesondere Graphitpulver, angereichert wird.

14. Verfahren gemäß Anspruch 12 oder 13, **dadurch gekennzeichnet, dass** der Schaumstoff (10) mit dem nativen Lösemittel (11) in einem Gewichtsverhältnis zwischen 0,1 und 1, vorzugsweise zwischen 0,25 und 0,7, besonders bevorzugterweise zwischen 0,3 und 0,5, insbesondere bevorzugterweise von 0,4 vermischt wird.

15. Verfahren gemäß einem der Ansprüche 12 bis 14, **dadurch gekennzeichnet, dass** durch Auflösen des Schaumstoffs (10) im nativen Lösemittel (11) ein Flüssigkunststoff (12) als Zwischenprodukt erzeugt wird, welchem anschließend Metallpulver (13) hinzugefügt wird; wobei der Flüssigkunststoff (12) und das Metallpulver (13) bevorzugterweise in einem Gewichtsverhältnis zwischen 1:1 und 4:1, besonders vorzugsweise zwischen 2:1 und 3:1 vermischt werden.
